# EUROPEAN PATENT APPLICATION

(11) **EP 2 253 987 A1**
(43) Date of publication of application: **24.11.2010**
(21) Application number: 10163524.1
(22) Date of filing: 21.05.2010
(51) Int. Cl.: G02B 26/12, H04N 1/195, H04N 1/191

(54) **Multiple integrated multi-beam laser scanning system**

(30) Priority: 21.05.2009 US 469932
(71) Applicant: Palo Alto Research Center Incorporated, Palo Alto, California 94304 (US)
(72) Inventor: Maeda, Patrick Y., Mountain View, CA 94040 (US)
(74) Representative: Grünecker, Kinkeldey, Stockmair & Schwanhäusser Anwaltssozietät

(57) **Abstract**

Two integrated multi-beam sources are positioned and disposed such that each emits light toward an optical combiner. The combiner is of a type in which the optical paths of said first laser beams and the optical paths of said second laser beams may be made to be generally parallel to one another such that the optical system aperture throughput for the two integrated multi-beam sources is roughly the same as for a single integrated multi-beam source. The combiner may be a splitter such that a portion of the optical energy from each source is directed into an imaging path and a portion of the optical energy is directed toward an optical sensor for, inter alia, controlling the output of the sources. Additional sources and combiners maybe added in series, with the output of one combiner being the input to the additional combiner together with the output from the additional source.

## Description

### BACKGROUND

The present disclosure is related to imaging systems, and more specifically to multiple-beam laser sources and imaging systems used in printers, copiers, facsimile machines and the like employing same.

There are several types of modern imaging (e.g., printing and copying) devices, typically separated by the type of system (or imaging engine) used to produce an image. One example is an electrophotographic marking system, which forms the imaging engine for printers, copiers, facsimile machines, and many other similar devices.

In a typical electrophotographic marking system, a light source such as a laser is caused to expose a photosensitive surface, such as a charged photoreceptor, with a representation of a desired image. The photoreceptor is discharged where exposed, creating an electrostatic latent image on the photoreceptor's surface. Toner particles are then selectively applied to the photosensitive surface where exposed (or alternatively where not exposed), forming a latent (toner) image, which is then transferred onto a substrate, such as a sheet of paper. The transferred toner is then fused to the substrate, usually by using heat and/or pressure, to thereby create a permanent printed image on the substrate. The surface of the photoreceptor is then cleaned of residual toner and recharged in preparation for subsequent image production.

The foregoing broadly describes a monochrome (black and white) electrophotographic marking system. Electrophotographic marking can also produce polychromatic (color) images in several different ways, for example by repeating the above process once for each color of toner that is used to make a composite color image. In one example of a color process, called a READ IOI process (Recharge, Expose, and Develop, Image On Image), a charged photoreceptive surface is exposed to a light image which represents a first color, say black. The resulting electrostatic latent image is then developed with cyan toner to produce a cyan toner image. The charge, expose, and develop process is repeated, using the same photoreceptor, for a second color, say yellow, then for a third color, say magenta, and finally for a fourth color, say black. The various latent images and color toners are placed in a superimposed registration such that a desired composite color image results. That composite color image is then transferred and fused onto a substrate. Alternatively, a multiple exposure station system can be employed, requiring a separate charging, exposing, and developing station for each color of toner.

One way of exposing a photoreceptor in systems such as those described above is to use a laser array source subsystem and a Raster Output Scanner (ROS) subsystem. A laser array source subsystem is typically comprised of a multiple source laser array and associated optics for collimating, focusing, etc. the laser beams output by the array. A ROS subsystem is typically comprised of a rotating polygon having a plurality of mirrored facets, and a post-polygon optical system. In a simplified description of operation, a collimated laser beam is reflected from the facets of the polygon and passed through imaging elements that project the laser beam into a finely focused spot of light on the photoreceptor's surface. As the polygon rotates (with the photoreceptor fixed), the source beam traces a path on the photoreceptor surface referred to as a scan line. By synchronizing motion of the photoreceptor with the polygon rotation, the spot raster scans (i.e., one line after another) the surface of the photoreceptor. By modulating the laser beam with image information a predetermined latent image is produced on the photoreceptor. The direction of the sweeping beam is referred to as the scan direction, while the generally perpendicular direction of motion of the photoreceptor is called the process direction.

One measure of the quality of a printing system is its resolution. Resolution is essentially a measure of how fine an individual pattern of printed pixels may be produced by a printing system. Modern printing systems reach resolutions as high as 2400 dots-per-inch (dpi). This produces very smooth curves, solid blocks of color, smooth color transitions, and so forth. To practically achieve this resolution, the light source used with the ROS system is an integrated array capable of simultaneously producing multiple, individually addressable, spaced-apart light beams. Current state-of-art printing systems use an integrated array of as many as 32 laser light sources for ROS printing. A vertical cavity surface emitting laser (VCSEL) is a typical integrated source used in ROS-type electrophotographic marking systems.

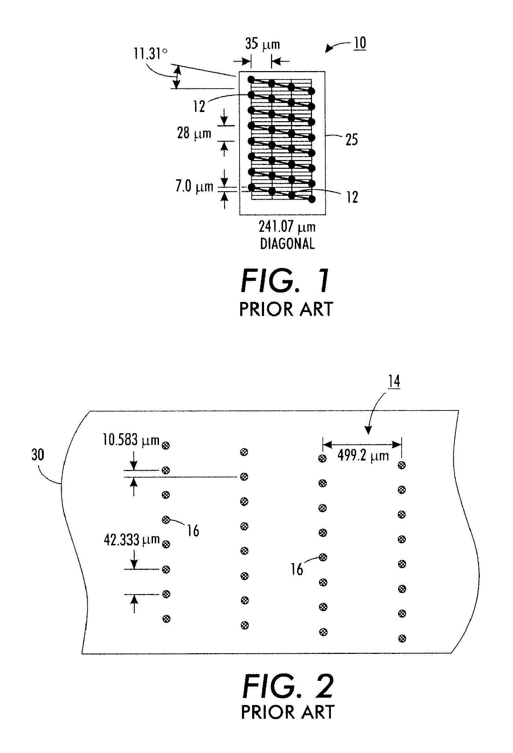

An exemplary 8-row-by-4-column integrated array provides columns of sources at the photosensitive with each source spaced apart in the scan direction by 30-40 microns, the sources in each column spaced apart by 20-30 microns, and each column shifted downward in the process direction from the previous column by 5-10 microns. Such an integrated array employed in a typical ROS system produces a spot pattern on the photoreceptor such that each spot is spaced apart in the scan direction by 450-550 microns, spot-to-spot spacing in the process direction of 42.333 microns, and each column of spots shifted downward in the process direction from the previous column by 10.583 microns. Fig. 1 is a beam layout 10 viewed in plan view of the exit facet an integrated multi-beam source according to a known array for simultaneously producing 32 individually addressable, spaced-apart light beams 12. Fig. 2 is a spot pattern 14 produced by the array of Fig.1 (post-optics) at the photosensitive surface (image plane) according to the prior art in which 32 lasers produce spots 16.

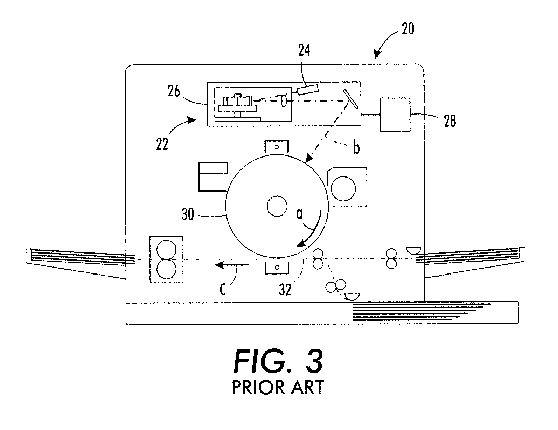

Fig. 3 is an exemplary prior art imaging apparatus 20, such as a printer, copier, or the like. While an in-depth review of a complete apparatus 20 are beyond the scope of the present disclosure, examples may be found, for example, in US Patent 7,466,331 and US Patent 7,236,280, each of which being incorporated herein by reference.

Briefly, a typical apparatus 20 comprises a raster output scanner (ROS) sub-system 22, an array source subsystem 24, rotating polygon mirror and lens assembly 26, and controller 28 which manages these elements to produce a light beam(s) "b" which are made incident on the photosensitive surface of a rotating photoreceptor 30. Toner is selectively picked up by the photoreceptor 30 where exposed by beam b to form a latent image, which is then transferred and fused to a paper substrate 32. The photoreceptor is cleaned and recharged, and the process repeated.

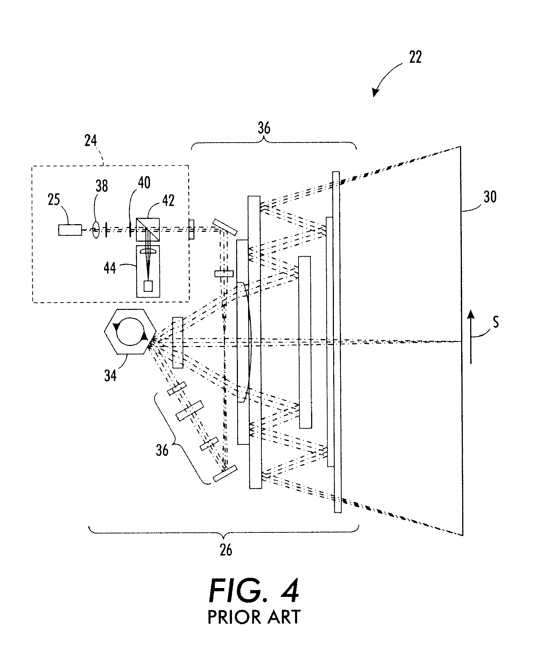

With reference to Fig. 4, raster output beam array scanning sub-system 22 of a type known in the art is shown. As mentioned, scanning sub-system 22 typically includes a polygon mirror and lens assembly subsystem 26, which itself comprises a rotating polygon mirror 34, and numerous optical elements 36 which, among other functions, serve to provide a compact optical path and optical beam conditioning and correction for the beam(s) produced by integrated multi-beam laser source 25 of array source subsystem 24. Array source subsystem 24 generates one or more light beams which together form a beam array 38. Optical elements focus and collimate the beam array 38, and an aperture 40 defines the width of the collimated beams from the array.

A beam splitter 42 may be disposed in the optical path of beam array 38. Beam splitter 42 allows some amount of the light energy of beam array 38 to pass therethrough to proceed to polygon mirror 34, optical elements 36 and ultimately to photosensitive surface 30. Beam splitter 42 redirects the balance of the light energy to a beam monitor 44 such as a photodiode optical power monitor. The basis for splitting the beam array in this fashion is to provide a view of the beam array which can be used to adjust power, time pulse sequencing, beam position, and other attributes of array source subsystem 24 and the process of generating beam array 38. This monitoring is particular important in high-resolution, multi-beam system in order to obtain optimum output quality.

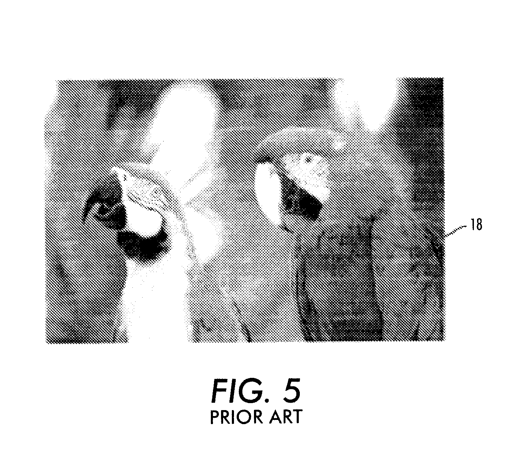

However, there is an ever-present demand for improved imaging quality. Electrophotographic marking systems are comprised of a number of optical elements. Unavoidable imprecision in the shape and/or mounting of these optical elements, wear, environmental changes, etc. inevitably introduce anomalies in the quality of the scan line on the photoreceptor, leading to reduced quality imaging. One such anomaly is slight variation in scan line spacing on the photoreceptor. Such spacing variation, even if slight, can lead to perceptible tone variation in the scan line direction of the printed image, commonly referred to as banding artifacts. Fig. 5 shows light and dark streaks within an image 18 which represent banding artifacts in that image as printed. Furthermore, the perceptibility of such banding increases in multiple-color printing systems due to color mixing and the ability of the human eye to accurately detect certain nonlinearities in color gradation. Another common imaging quality issue is the stair-step pattern produced when attempting to print a curve, commonly known as "jaggies".

One approach to increasing image quality from an electrophotographic marking system is to simply increase the number of laser sources forming the integrated array to increase the scan resolution. However, while an integrated array with 32 individual sources is currently a reasonably standard, readily available device, integrated laser arrays with more than 32 sources are not. Thus, any system incorporating an integrated array of more than 32 sources must account for the significantly increased cost of a specially designed and built laser array. In addition, as one adds sources to an array either each individual source shrinks, making array fabrication more difficult and costly, or the optical system aperture increases due to a large source array area, thus requiring an increase in per-laser power. Higher powered lasers run hotter, have a shorter lifespan, and are again non-standard. Furthermore, for each additional source in an integrated array there is a corresponding increase in the risk of a device failing and rendering the entire integrated array device non-useable.

If one were to simply abut two or more integrated laser arrays and direct the beams they produce to a single spot on the scanning subsystem for scanning, as disclosed for example in the aforementioned US Patent 7,236,280, the beams from each array will travel in different optical paths. Inherent operating variations such as thermal changes result in different displacements for the different optical paths, resulting in visible printing artifacts in the final printed image.

Thus, there are a number of compelling reasons that simply increasing the number of sources in an integrated array as well as simply abutting two integrated arrays together and directing their output to the scanning subsystem are not practical responses to the demand for increased resolution.

### SUMMARY

Accordingly, the present disclosure is directed to an apparatus for improving the image quality produced by marking systems which does not require redesigning integrated light sources, increasing their output power, redesigning other system components, nor significantly increasing component costs. A combination of a number of integrated multi-beam sources and combiner/splitters are used to produce an increased number of beams and spots, thereby permitting an improved printing resolution and a decrease in printing artifacts.

According to one aspect of the disclosure, two integrated multi-beam sources comprising individually addressable light sources are positioned and disposed such that each emits light toward an optical combiner. The combiner is of a type in which the optical paths of said first laser beams and the optical paths of said second laser beams may be made to be generally parallel to one another. Furthermore, the combiner is of a type such that the optical system aperture throughput for the two integrated multi-beam sources is roughly the same as for a single integrated multi-beam source.

According to one embodiment, the optical combiner is a beam splitter. The optical path of the first integrated source is such that a portion of the light beam energy therefrom passes though the splitter into an imaging path (i.e., in the path toward the photosensitive surface) while the balance of the light beam energy is reflected. The optical path of the second integrated source is such that a portion of the light beam energy therefrom is reflected by the splitter into the imaging path while the balance of the light beam energy is passes thorough the splitter.

According to another embodiment, an optical sensor is positioned and disposed such that it may receive light beam energy from the splitter. In this aspect, the optical path of the first integrated array is such that the portion of the light beam energy therefrom which is reflected by the splitter is directed to the optical sensor. The optical path of the second integrated array is such that the portion of the light beam energy therefrom which passes through the splitter is directed to the optical sensor. In this embodiment, the optical sensor may be used to measure optical power or other attributes of the light beams produced by the first and second integrated multi-beam sources.

In one embodiment of the apparatus of claim 5, said optical paths of said first light beams are substantially perpendicular to said optical paths of said second light beams prior to their incidence on said first combiner.

In one embodiment of the apparatus of claim 9, said first and second combiners are first and second optical beam splitters, respectively.

In a further embodiment said first combiner is an optical beam splitter which is substantially fifty percent reflective and substantially fifty percent transmissive, and said second combiner is an optical beam splitter which is substantially thirty-three and one third percent (33.3̅%) reflective and substantially sixty-six and two-thirds percent (66.6̅%) transmissive.

In a further embodiment the apparatus, further comprisesg:
a second beam monitor having a second beam receiving surface positioned and disposed such that;
a portion of said imaging beam array is reflected by said second beam splitter into a path toward said second beam receiving surface; and
a portion of each of said third light beams is transmitted by said second beam splitter in a path toward said second beam receiving surface.

In a further embodiment said optical paths of said second light beams are substantially parallel to said optical paths of said third light beams prior to incidence on the first and second combiners.

In a further embodiment each of said first, second, and third integrated multi-beam sources comprise 32 individually addressable, spaced-apart laser emitters.

According to another aspect of the present disclosure, the first and second integrated multi-beam sources are positioned and disposed relative to the combiner such that beams from the first and second integrated arrays are incident on the photosensitive surface at a first array of spots and a second array of spots, respectively. The second laser spots are shifted in position relative to said first laser spots. According to one embodiment, the second array of spots are shifted in position relative to the array of spots by generally half the process-direction spacing and generally half the scan-direction spacing between the spots comprising the first array of spots. Other relative positions of the first and second arrays of spots may also be provided.

According to still a further aspect of the present disclosure, the electrophotographic marking system further includes a third integrated multi-beam source to provide a third array of spots on the photosensitive surface. The third integrated multi-beam source can be of a type similar to that of the first and second integrated multi-beam sources. A second combiner may be placed in the optical path of the first and second integrated multi-beam sources, downstream from the first combiner. The second combiner is of a type in which the combined optical path of said first and second laser beams and the optical paths of third laser beams emitted by the third integrated multi-beam source may be made to be generally parallel to one another. Furthermore, the second combiner is of a type such that the optical system aperture throughput for the three integrated multi-beam sources is roughly the same as for a single integrated multi-beam source.

The second combiner may be an optical splitter disposed such that a portion of the combined first and second beams are reflected into the path of a power control sensor, a portion of the combined first and second beams are transmitted into the imaging path (e.g., in a path toward said photosensitive surface), a portion of said third beans are transmitted by said optical splitter in a path toward said power control sensor, and a portion of said third beams are reflected by said optical splitter into said imaging path. Alternatively, the reflection and transmission functions may be reversed, depending upon the design of the target system for the array source subsystem and other elements disclosed herein.

Finally, the present disclosure contemplates systems, such as marking, printing, and other imaging systems which include an electrophotographic marking system, and variations thereof, otherwise disclosed herein.

The above is a summary of a number of the unique aspects, features, and advantages of the present disclosure. However, this summary is not exhaustive. Thus, these and other aspects, features, embodiments, and advantages of the present disclosure will become more apparent from the following detailed description and the appended drawings, when considered in light of the claims provided herein.

### BRIEF DESCRIPTION OF THE DRAWINGS

In the drawings appended hereto like reference numerals denote like elements between the various drawings. While illustrative, the drawings are not drawn to scale. In the drawings:

Fig. 1 is a plan view of a beam layout for a laser array simultaneously producing up to 32 individually addressable, spaced-apart light beams according to the prior art.

Fig. 2 is a 32-spot pattern produced at a photosensitive surface by a laser array producing 32 individually addressable, spaced-apart light beams according to the prior art.

Fig. 3 is an illustration of an apparatus for forming an image on a photosensitive surface, such as in a printer, digital copier, or the like of a type known in the art.

Fig. 4 is an illustration of the array source and raster output scanner and optics portion of an apparatus for forming an image on a photosensitive surface, such as a printer, digital copier, or the like of a type known in the art.

Fig. 5 is an image of a type printed by a prior art printing apparatus illustrating the effect referred to as banding.

Fig. 6 is an illustration of an array source subsystem comprising two integrated multi-beam sources and a combiner according to one embodiment of the present disclosure.

Fig. 7 is an illustration of a beam array scanning subsystem, including an array source subsystem of a type illustrated in Fig. 6, according to one embodiment of the present disclosure.

Fig. 8 an exemplary spot array pattern, representing spots at which beams from two independent integrated multi-beam sources may be incident on a photoreceptive surface, according to one embodiment of this disclosure.

Fig. 9 is another exemplary spot array pattern, representing spots at which beams from two independent integrated multi-beam sources may be incident on a photoreceptive surface, according to another embodiment of this disclosure.

Fig. 10 is an illustration of an array source subsystem comprising three integrated multi-beam sources and two combiners according to one embodiment of the present disclosure.

Fig. 11 is an apparatus for forming an image on a photosensitive surface, such as a printer, digital copier, or the like according to one embodiment of the present disclosure.

### DETAILED DESCRIPTION

While the following description will be in terms of certain preferred embodiments, and variations thereof, it will be understood that it is not intended that this description be limited to those embodiments. In certain instances variations of the described embodiments will be highlighted, however many alternatives beyond those explicitly disclosed and described will become apparent to one of ordinary skill in the art upon review of this disclosure. Thus, the present description is intended to cover all alternatives, modifications, and equivalents as may be appreciated from this description and the claims appended hereto.

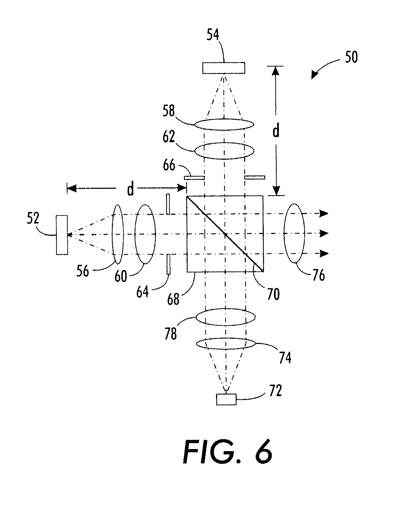

With reference to Fig. 6, there is shown what is referred to herein as array source subsystem 50 according to one aspect of the present disclosure. Array source subsystem 50 comprises a first integrated multi-beam source 52 and a second integrated multi-beam source 54, each comprising a plurality of laser emitters (individual emitters not shown) for simultaneously producing a plurality of independently controllable laser beams. Initially, first and second integrated multi-beam source 52, 54 are positioned and disposed such that the optical paths of the beams emitted by first integrated multi-beam source 52 are non-parallel to the optical beams emitted by second integrated multi-beam source 54. As will be discussed further below, in certain embodiments beams emitted by first integrated multi-beam source 52 may be roughly perpendicular to the optical beams emitted by second integrated multi-beam source 54.

In one example, first and second integrated multi-beam sources 52, 54 comprise integrated vertical cavity surface emitting lasers (VCSELs) in which a plurality of emitters are arranged in a two-dimensional array. A VCSEL is integrated in that a single structure has multiple, independently operable light emitting devices formed therein, often on a single substrate or die. VCSELs are just one example, and other structures such as integrated edge emitting devices may also be employed. While lasers are described as forming a part of this embodiment, it will be appreciated that many other forms of light sources, such as light emitting diodes (LEDs), organic light emitting diodes (OLEDs), and so forth may be equivalently substituted for the laser sources described. The number of independently controllable emitters, and hence beams, per integrated multi-beam source is a matter of design choice. For the purposes of illustration, a source will be considered to have 32 independently operable emitters, although the concepts disclosed herein readily extend to fewer or more emitters per integrated multi-beam source.

Optical elements 56, 58 direct the laser beams produced by the individual emitters of first and second integrated multi-beam sources 52, 54, respectively, into beam arrays 60, 62. Apertures 64, 66 limit the beam array width of the first and second beam arrays, respectively.

Array source subsystem 50 further comprises a combiner 68 disposed in the optical paths of first and second beam arrays 60, 62. In one embodiment, combiner 68 is a beam splitter, although other types of elements may also serve the functional role of combiner 68 in this embodiment. Beam splitters with partially metalized coatings or non-polarizing multilayer dielectric coatings can be used. Furthermore, pellicle, plate type or cube type beam splitters can be used. According to this embodiment, first beam array 60 enters the combiner and is incident on semi-reflective surface 70. In one specific instance of this embodiment, semi-reflective surface 70 transmits roughly 50 percent of the incident light energy, and reflects the remaining roughly 50 percent light energy at 90 degrees to the angle of incidence, although other specific arrangements may also serve the functional role of combiner 68 in this embodiment. Similarly, second beam array 62 enters the combiner and is incident on semi-reflective surface 70. Roughly 50 percent of the incident light energy is transmitted, and roughly 50 percent of the incident light energy is reflected by semi-reflective surface 70 at 90 degrees to the angle of incidence. In this embodiment, beams emitted by first integrated multi-beam source 52 are roughly perpendicular to the optical beams emitted by second integrated multi-beam source 54. However, other relative angles are possible, the nature of combiner 68, and the angle of semi-reflective surface 70 to a large extent determining the relative positions of first and second integrated multi-beam sources 52, 54.

Array source subsystem 50 also comprises a beam monitor 72 and associated focusing optics 74. Beam monitor 72 may for example comprise a photodiode optical power monitor, whose role has previously been described and is beyond the scope of this disclosure.

Thus, each element of assembly 50 is positioned and disposed such that that portion of the light energy of beam array 60 passing through semi-reflective surface 70 continues on in an optical path (e.g., toward a ROS subsystem, discussed further below), and the balance of the light energy is reflected by semi-reflective surface 70 in a direction toward beam monitor 72. Conversely, that portion of the light energy of beam array 62 passing through semi-reflective surface 70 continues on in an optical path toward beam monitor 72, and the balance of the light energy is reflected by semi-reflective surface 70 into the optical path.

Beam arrays 60 and 62 are each themselves comprised of a plurality of individual spatially separated laser beams. Elements of assembly 50 are further positioned and disposed such that the individual spatially separated laser beams exiting combiner 68 in an imaging path (toward the ROS subsystem) form an imaging beam array 76 comprised of a plurality of individual, spatially separated laser beams. The spacing of those beams is discussed further below, but it should be noted that beams from first integrated multi-beam source 52 and second integrated multi-beam source 54 in this path are generally parallel or distributed within a small angular range and spatially overlap in varying amounts relative to one another. Elements of assembly 50 are still further positioned and disposed such that the individual, angularly separated laser beams exiting combiner 68 in a direction toward beam monitor 72 form essentially a monitor beam array 78 comprised of a plurality of individual angularly separated laser beams. Optics 74 associated with beam monitor 72 serve to focus monitor beam array 78 onto a detector surface forming a part of beam monitor 72.

The embodiment described above effectively doubles the number of beams, and hence spots, available for writing to the photosensitive surface. As previously mentioned, typical high-performance marking systems employ integrated multi-beam sources of as many as 32 individual, independently controllable beams. Thus, the embodiment above provides an imaging beam array of as many as 64 individual, independently controllable beams. Importantly, while the number of individual beams in an imaging beam array 76 is effectively doubled, the optical aperture throughput does not increase over that of prior systems. That is, the ratio of the process-direction beam spacing at the laser to the process-direction beam spacing at the photosensitive surface does not change. Thus, the power of the individual laser emitters need not be increased according to the above embodiment. The use of a beam splitter as combiner 68 does result in a 50 percent decrease of optical power for each of the first and second beam arrays 52, 54. However, the total power at the photosensitive surface is the sum of the optical powers of the individual beams at the photosensitive surface. As there are twice as many beams in the embodiment described above as compared to the prior systems, the loss of 50 percent of the beam power at the combiner 68 is offset by the doubling of the number of individual beams. Furthermore, the optical power which does not form a part of the imaging beam array 76 is used for automatic power control (APC) detection and other aspects of monitoring and controlling the output of the integrated multi-beam sources 52, 54.

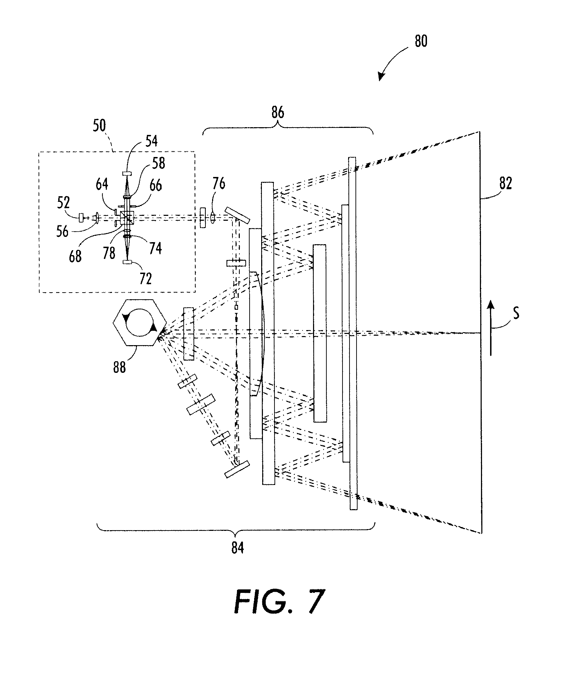

With reference next to Fig. 7, there is shown therein an array source subsystem 50 integrated into a beam array scanning subsystem 80, in this case a ROS subsystem, according to another embodiment of the present description. Array source subsystem 50 is substantially as described above and shown in Fig. 6. Exiting array source subsystem 50 is imaging beam array 76. According to this embodiment, imaging beam array 76 comprises up to 64 individually controllable, spaced-apart laser beams, each modulated so as to form a desired pattern on photoreceptive surface 82.

The polygon mirror and lens assembly 84 includes a number of optical elements 86 which serve to provide a compact optical path and optical beam conditioning and correction for the beams produced by first and second integrated multi-beam sources 52, 54, and are beyond the scope of the present description.

Beams forming imaging beam array 76 share a common optical path through most of the scanning optical system, which promotes optomechanical and beam pointing stability. The elements comprising array source subsystem 50 are positioned and disposed such that optical elements 86 and rotating polygon mirror 88 scan the beams produced by first and second integrated multi-beam sources 52, 54 on photoreceptive surface 82 (such as a photoreceptor) at a spacing determined in part by the relative spacing of the beams at their respective sources. That is, the positions of first and second integrated multi-beam sources 52, 54 relative to one another determine the spacing of spots for each pixel on the photoreceptive surface.

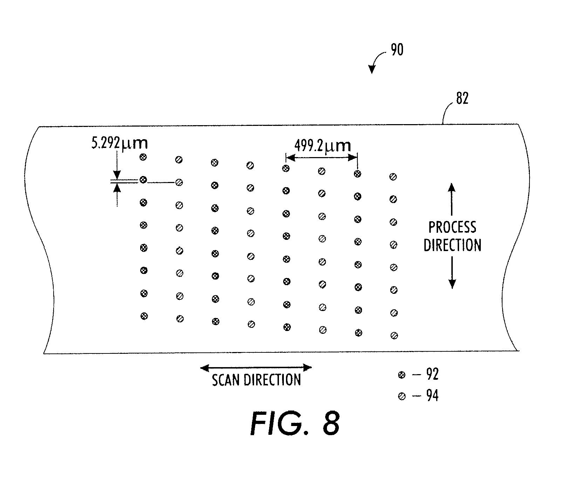

Specifically, one exemplary array 90 of spots on a photoreceptive surface according to one embodiment of this disclosure is illustrated in Fig. 8. (which, as with all figures hereof, is not drawn to scale). Spots 92 at which beams from first integrated multi-beam source 52 are spaced apart from one another by an amount which is proportional to the spacing of the emitters comprising first integrated multi-beam source 52. Likewise, spots 94 at which beams from second integrated multi-beam source 54 are spaced apart from one another by an amount which is proportional to the spacing of the emitters comprising second integrated multi-beam source 54. The positions of the spots 92, 94 relative to one another are shifted by an amount determined by, among other things, the placement of the first and second integrated multi-beam sources 52, 54 relative to one another (it being assumed that the emitter spacing as between the first and second integrated multi-beam sources 52, 54 are generally the same). The arrays are slightly decentered relative to the collimator lens optical axis and relative to each other in this manner to achieve the desired process direction beam spacing at the photosensitive surface.

In one embodiment, the scan direction spacing is controlled so that the spots produced by first and second integrated multi-beam sources 52, 54 are in the range 200-300 microns apart in the scan direction, roughly 250 microns for the embodiment shown in Fig. 8. Furthermore, in one embodiment, the spots produced by first and second integrated multi-beam sources 52, 54 are in the range of 4-6 microns apart in the process direction, roughly 5.292 microns (4800 spi) for the embodiment shown in Fig. 8. An example of the individual emitter spacings for first and second integrated multi-beam sources 52, 54 is given with reference to Fig. 1. It will be appreciated that the orientations and spacings discussed herein are for exemplary embodiments, and spacings other than those specifically discussed herein are contemplated and within the scope of the present disclosure.

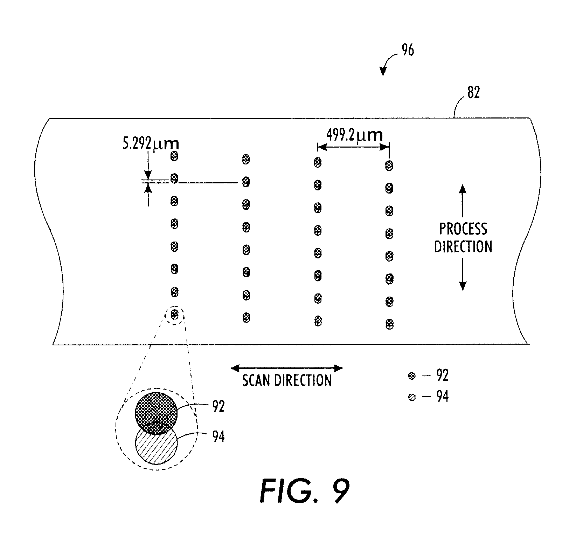

Fig. 9 illustrates an alternate arrangement 96 of spots 92, 94 on a photoreceptive surface according to another embodiment of this disclosure. In this embodiment, columns of spots 92, 94 are not shifted relative to one another, but rather are co-columnar. Rows of spots are, however, shifter relative to one another. For example, the spots produced by first and second integrated multi-beam sources 52, 54 are in the range of 4-6 microns apart in the process direction, again roughly 5.292 microns (4880 spi) for the embodiment shown in Fig. 9. The arrays are again slightly decentered relative to each other to achieve the desired process direction beam spacing at the photosensitive surface. This pattern may be produced by controlling the relative positions of first and second integrated multi-beam sources 52, 54, particularly which each source 52, 54 has the same emitter spacings (such as that shown and described with reference to Fig. 1). Many other spot spacings and patterns are possible and contemplated hereby. Thus, it will be appreciated that the specific spacing and pattern for spots 92, 94 is a matter of design choice, and not a limitation in the scope of the present disclosure.

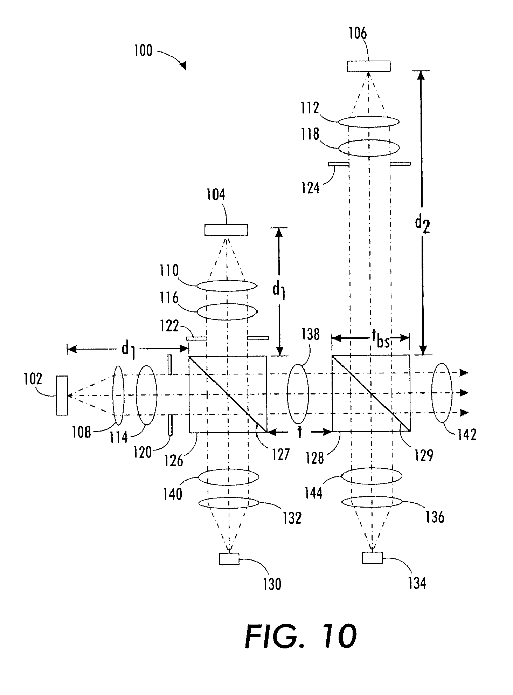

The preceding description has been of a system employing two integrated multi-beam sources. However, it is possible using the concepts of this disclosure to obtain an array source subsystem of more than two integrated multi-beam sources. For example, with reference to Fig. 10, an array source subsystem 100 is shown comprising first, second, and third integrated multi-beam sources 102, 104, 106, each comprising a plurality of laser emitters (individual emitters not shown) for simultaneously producing a plurality of independently controllable laser beams. Optical elements 108, 110, 112 direct the laser beams produced by the individual emitters of first, second, and third integrated multi-beam sources 102, 104, 106, respectively, into beam arrays 114, 116, 118. Apertures 120, 122, 124 limit the beam array width of the first, second, and third beam arrays, respectively.

Array source subsystem 100 further comprises first and second combiners 126, 128 disposed in the optical path of first and second beam arrays 114, 116 in the case of first combiner 126, and first and third beam arrays 114, 118 in the case of second combiner 128. As previously described, in one embodiment, combiners 126, 128 are each beam splitters, although other types of elements may also serve the functional role of combiners 126, 128. According to this embodiment, first beam array 114 enters the combiner and is incident on semi-reflective surface 127. In one specific instance of this embodiment, semi-reflective surface 127 transmits roughly 50 percent of the incident light energy, and reflects the remaining roughly 50 percent light energy at 90 degrees to the angle of incidence, although other specific arrangements may also serve the functional role of combiner 126 in this embodiment. Similarly, second beam array 116 enters the combiner and is incident on semi-reflective surface 127. Roughly 50 percent of the incident light energy is transmitted, and roughly 50 percent of the incident light energy is reflect by semi-reflective surface 127 at 90 degrees to the angle of incidence. A first imaging beam array 138, comprising the transmitted portion of first beam array 114 and the reflected portion of second beam array 116, is thereby output from combiner 126 in a direction toward second combiner 128, and a first monitor beam array 140, comprising the reflected portion of first beam array 114 and the transmitted portion of second beam array 116, is output from combiner 126 in a direction toward a first beam monitor and focusing optics 130, 132. First imaging beam array 138 and first monitor beam 140 are thus each a composite of the beams produced by first and second integrated multi-beam sources 52, 54.

Second combiner 128 is positioned and disposed such that it receives both first imaging beam array 138 as well as third beam array 118 at a second semi-reflective surface 129. First imaging beam array 138 enters second combiner 128, where it is combined with third beam array 118 to produce a second imaging beam array 142 and a second monitor beam array 144 are produced. Second combiner is then, in effect, in series with first combiner 126. In order that the relative optical energies are the same as between first imaging beam array 138 and third beam array 118, it is necessary to vary the transmission/reflection ratio of combiner 128 from that of combiner 126. In one specific instance of this embodiment, semi-reflective surface 129 transmits roughly two-thirds (66.6̅% percent) of the incident light energy, and reflects the remaining roughly one-third (33.3̅% percent) of the light energy at 90 degrees to the angle of incidence, although other specific arrangements may also serve the functional role of combiner 128 in this embodiment. Thus, roughly two-thirds of the light energy of first imaging beam array 138 is transmitted by the semi-reflective surface 129 of combiner 128 into the imaging path (e.g., in a direction towards a scanning subsystem), and roughly one-third of the light energy of first imaging beam array 138 is reflected in a direction toward second beam monitor 134. Similarly, roughly one-third of the light energy of third beam array 118 is reflected by the semi-reflective surface 129 of combiner 128 into the imaging path, and roughly two-thirds of the light energy of third beam array 118 is transmitted in a direction toward second beam monitor 134.

The total, unfolded beam optical path length for each beam from the emitters (channels) comprising first, second, and third integrated multi-beam sources 102, 104, and 106 must be roughly equal. In the embodiment shown in Fig. 6 and described above, this effectively requires that the first and second integrated multi-beam sources 60, 62 must be approximately equally spaced by a distance d from combiner 68, and that in the present embodiment the first and second integrated multi-beam sources 102, 104 must be approximately equally spaced a distance d₁ from combiner 126. However, due to the respective positions of combiners 126 and 128 relative to the photosensitive surface (not shown), third integrated multi-beam source 106 must be spaced a distance d₂ from combiner 128 such that d₁<d₂. The actual distances d₁ and d₂ will be a function of the system in which they are disposed, but exemplary distances are in the range of 100 mm to 150 mm (d₂ = d₁ + t + n_{bs}t_{bs} where t is the distance between beamsplitters, n_{bs} is the refractive index of the beamsplitter substrate material, and t_{bs} is the thickness of the beamsplitter). By moving third integrated multi-beam source 106, optical element(s) 112, and aperture 124 farther away from combiner 128, the unfolded channel optical path lengths are made the same for all sources, and pupils of all sources are made coincident.

Elements of assembly 100 are further positioned and disposed such that the individual spatially separated laser beams exiting combiner 128 into the imaging path form a second imaging beam array 142 comprised of a plurality of individual spatially separated laser beams. The spacing of those beams is discussed further below, but it should be noted that beams from first, second, and third integrated multi-beam sources 102, 104, and 106 in the imaging path are generally parallel or distributed within a small angular range and spatially overlap in varying amounts relative to one another. Elements of assembly 100 are still further positioned and disposed such that the individual angularly separated laser beams exiting combiner 128 in a direction toward beam monitor 134 form a second monitor beam array 144 comprised of a plurality of individual angularly separated laser beams. Optics 136 associated with second beam monitor 134 serve to focus second monitor beam array 144 onto a detector surface forming a part of second beam monitor 134.

In this embodiment, the number of beams forming the imaging beam array is effectively triple that of prior art systems. Second imaging beam array 142 may, for example, be comprised of as many as 96 individual, independently controllable beams. Importantly, the optical aperture throughput does not increase over that of prior systems. Again, the ratio of the process-direction beam spacing at the laser to the raster-direction beam spacing at the photosensitive surface does not change. Thus, it is not required to increase the power of the individual laser emitters. The fact that according to this embodiment combiner 128 results in a decrease by two-thirds of available optical power for first imaging beam array 138 and third beam array 118 is offset by the fact that there is effectively triple the number of beams in the final second imaging beam array 142, again keeping in mind that the total power at the photosensitive surface is simply the sum of the optical powers of the individual beams at the photosensitive surface. And again, the optical power which does not form a part of the second imaging beam array 142 is used for automatic power control (APC) detection and other aspects of monitoring and controlling the output of the integrated multi-beam sources 102, 104, and 106.

While the preceding description has been of a system employing three integrated multi-beam sources, it is possible using the concepts of this disclosure to obtain an array source subsystem of more than three integrated multi-beam sources. Each additional beam array adds to the source array assembly additional optical elements associated with the array, an additional combiner, and optionally an additional beam monitor and associated optic elements. The transmission ratio of each additional combiner will in general be equal to the total number of combiners in the optical path divided by the total number of integrated multi-beam sources (or alternatively, the reflectance is generally equal to one divided by the number of integrated multi-beam sources). The distance between added integrated multi-beam sources and their associated combiners will increase, as previously described, such that the unfolded optical path lengths for each channel remain the same.

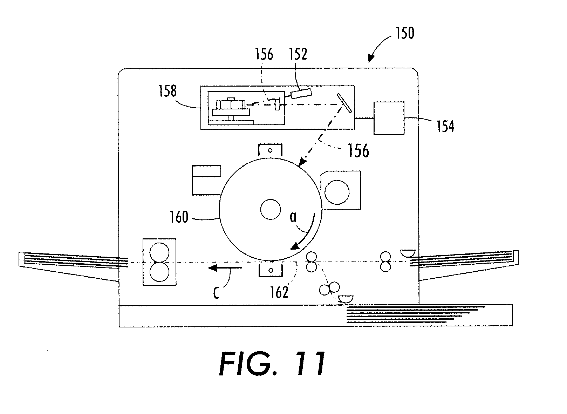

Finally, according to another aspect of the present disclosure illustrated in Fig. 11, an imaging system 150 is provided which comprises an array source subsystem 152 of at least two integrated multi-beam sources and at least one combiner which, under the control of controller 154, outputs an imaging beam array 156 to a beam array scanning subsystem 158. Beam array scanning subsystem 158 in turn directs imaging beam array 156 through various system optical elements (not shown) and ultimately to a photosensitive surface such as the surface of photoreceptor 160. Pulsed and scanned imaging beam array 156 may then form a latent image on photoreceptor 160 which may be transferred to an imaging substrate 162 such as paper.

The physics of modern electrical and mechanical devices and the methods of their production are not absolutes, but rather statistical efforts to produce a desired device and/or result. Even with the utmost of attention being paid to repeatability of processes, the quality of starting and processing materials, the accuracy of assembly, and so forth, variations and imperfections result. Accordingly, no limitation in the description of the present disclosure or its claims can or should be read as absolute. The limitations of the claims are intended to define the boundaries of the present disclosure, up to and including those limitations. To further highlight this, the term "substantially" may occasionally be used herein in association with a claim limitation (although consideration for variations and imperfections is not restricted to only those limitations used with that term). While as difficult to precisely define as the limitations of the present disclosure themselves, we intend that this term be interpreted as "to a large extent", "as nearly as practicable", "within technical limitations", and the like.

Furthermore, while a plurality of preferred exemplary embodiments have been presented in the foregoing detailed description, it should be understood that a vast number of variations exist, and these preferred exemplary embodiments are merely representative examples, and are not intended to limit the scope, applicability or configuration of the disclosure in any way. For example, the principles discussed herein apply to light sources other than lasers, such as light emitting diodes (LEDs), etc., and thus the descriptions herein of systems employing a laser source are exemplary and not exclusive descriptions of the systems according to the present disclosure. Furthermore, various of the above-disclosed and other features and functions, or alternative thereof, may be desirably combined into many other different systems or applications. Various presently unforeseen or unanticipated alternatives, modifications variations, or improvements therein or thereon may be subsequently made by those skilled in the art which are also intended to be encompassed by the claims, below.

## Claims

1. An apparatus for forming an image on a photosensitive surface, comprising:
a first integrated multi-beam source comprising a plurality of light emitters and optical elements disposed to simultaneously produce a plurality of first light beams in substantially parallel optical paths which are incident on said photoreceptive surface at an array of first spots on said photosensitive surface, adjacent first spots spaced apart by a substantially uniform process-direction spacing and a substantially uniform scan-direction spacing;
a second integrated multi-beam source comprising a plurality of light emitters and optical elements disposed to simultaneously produce a plurality of second light beams in substantially parallel optical paths, said optical paths of said light beams produced by said second integrated multi-beam source being non-parallel to said optical paths of said light beams produced by said first integrated multi-beam source, said plurality of second light beams being incident on said photoreceptive surface at an array of second spots on said photosensitive surface, adjacent second spots spaced apart by a substantially uniform process-direction spacing and a substantially uniform scan-direction spacing;
a first combiner, disposed in the optical paths of both of said first and second light beams such that the optical paths of said first light beams and the optical paths of said second light beams are made to be substantially parallel to one another, said first combiner outputting an imaging beam array into an imaging path;
wherein said first integrated multi-beam source and said second integrated multi-beam source are positioned and disposed such that said second light spots are shifted in position relative to said first light spots.

2. The apparatus of claim 1, wherein said second light spots are shifted in position relative to said first light spots by substantially one-half of said process-direction spacing.

3. The apparatus of claim 2, wherein said second light spots are further shifted in position relative to said first light spots by substantially one-half of said scan-direction spacing.

4. The apparatus of claim 1, wherein said first combiner is an optical beam splitter.

5. The apparatus of claim 4, wherein said optical beam splitter is substantially fifty percent (50%) reflective and substantially fifty percent (50%) transmissive.

6. The apparatus of claim 4, further comprising:
a first beam monitor having a first beam receiving surface positioned and disposed such that;
a portion of each of said first light beams is reflected by said beam splitter into a path toward said first beam receiving surface; and
a portion of each of said second light beams is transmitted by said beam splitter in a path toward said first beam receiving surface.

7. The apparatus of claim 6, wherein said first beam receiving surface is positioned and disposed to be substantially in the optical path of said second light beams prior to the incidence of said second light beams on said optical splitter, and substantially perpendicular to the optical path of said first light beams prior to the incidence of said first light beams on said optical splitter.

8. The apparatus of claim 1, wherein each of said first and second integrated multi-beam sources comprise 32 individually addressable, spaced-apart light emitters.

9. The apparatus of claim 1, further comprising:
a third integrated multi-beam source comprising a plurality of light emitters and optical elements disposed to simultaneously produce a plurality of third light beams in parallel optical paths, said optical paths of said light beams produced by said third integrated multi-beam source being non-parallel to said optical paths of said light beams produced by said first integrated multi-beam source, said plurality of third light beams being incident on said photoreceptive surface at an array of third spots on said photosensitive surface, adjacent third spots spaced apart by a substantially uniform process-direction spacing and a substantially uniform scan-direction spacing;
a second combiner, disposed in the imaging path and the optical path of said third light beams such that the optical paths of said imaging beam array and the optical paths of said third light beams are made to be substantially parallel to one another;
wherein said first, second, and third integrated multi-beam sources are positioned and disposed such that said first, second, and third light spots are shifted in position relative to one another.

10. The apparatus of claim 9, wherein said second and third light spots are shifted in position relative to said first light spots by substantially one-third of said process-direction spacing.

11. The apparatus of claim 10, wherein said second and third light spots are further shifted in position relative to said first light spots by substantially one-third of said scan-direction spacing.

12. An array source subsystem, comprising:
a first integrated multi-beam source comprising a plurality of laser emitters and optical elements disposed to simultaneously produce a plurality of first laser beams in substantially parallel optical paths which, when incident on a photoreceptive surface form an array of first spots thereon, adjacent first spots spaced apart by a substantially uniform process-direction spacing and a substantially uniform scan-direction spacing;
a second integrated multi-beam source comprising a plurality of laser emitters and optical elements disposed to simultaneously produce a plurality of second laser beams in substantially parallel optical paths, said optical paths of said laser beams produced by said second integrated multi-beam source being substantially perpendicular to said optical paths of said laser beams produced by said first integrated multi-beam source, said plurality of second laser beams when incident on said photoreceptive surface forming an array of second spots thereon, adjacent second spots spaced apart by a substantially uniform process-direction spacing and a substantially uniform scan-direction spacing;
a substantially 50 percent transmissive and 50 percent reflective beam splitter disposed in the optical paths of both of said first and second laser beams, said beam splitter forming an imaging beam array which is output into an imaging beam path, said imaging beam array comprised of said first and second laser beams such that the optical paths of said first laser beams and the optical paths of said second laser beams are made to be substantially parallel to one another;
said first integrated multi-beam source and said second integrated multi-beam source are positioned and disposed such that said second laser spots are shifted in position relative to said first laser spots when incident on said photoreceptive surface; and
a beam monitor having a beam receiving surface positioned and disposed such that;
a portion of each of said first laser beams is reflected by said beam splitter into a path toward said beam receiving surface; and
a portion of each of said second laser beams is transmitted by said beam splitter in a path toward said beam receiving surface.

13. The apparatus of claim 12, wherein said second laser spots are shifted in position relative to said first laser spots by substantially one-half of said process-direction spacing.

14. An imaging system, comprising:
an array source subsystem;
a controller subsystem for controlling the on/off state of beams from said array source subsystem in response to a desired image pattern to thereby cause said array source subsystem to produce an imaging beam array;
a beam array scanning subsystem receiving said imaging beam array and scanning said imaging beam array in a scan direction;
a photosensitive surface for receiving said scanning imaging beam array and marking material so as to produced a latent image thereon;
a substrate handling subsystem for positioning a substrate proximate said photosensitive surface for receiving said marking material and to thereby produce an image on said substrate;
said array source subsystem comprising:
a first integrated multi-beam source comprising a plurality of laser emitters and optical elements disposed to simultaneously produce a plurality of first laser beams in substantially parallel optical paths which, when incident on a photoreceptive surface form an array of first spots thereon, adjacent first spots spaced apart by a substantially uniform process-direction spacing and a substantially uniform scan-direction spacing;
a second integrated multi-beam source comprising a plurality of laser emitters and optical elements disposed to simultaneously produce a plurality of second laser beams in substantially parallel optical paths, said optical paths of said laser beams produced by said second integrated multi-beam source being non-parallel to said optical paths of said laser beams produced by said first integrated multi-beam source, said plurality of second laser beams when incident on said photoreceptive surface forming an array of second spots thereon, adjacent second spots spaced apart by a substantially uniform process-direction spacing and a substantially uniform scan-direction spacing;
a beam splitter, disposed in the optical paths of both of said first and second laser beams, said beam splitter forming an imaging beam array which is output into an imaging beam path, said imaging beam array comprised of said first and second laser beams such that the optical paths of said first laser beams and the optical paths of said second laser beams are made to be substantially parallel to one another;
said first integrated multi-beam source and said second integrated multi-beam source are positioned and disposed such that said second laser spots are shifted in position relative to said first laser spots when incident on said photoreceptive surface;
and
a beam monitor having a beam receiving surface positioned and disposed such that;
a portion of each of said first laser beams is reflected by said beam splitter into a path toward said beam receiving surface; and
a portion of each of said second laser beams is transmitted by said beam splitter in a path toward said beam receiving surface.

15. The apparatus of claim 14, wherein said second laser spots are shifted in position relative to said first laser spots by substantially one-half of said process-direction spacing.
